(19) Europäisches Patentamt / European Patent Office / Office européen des brevets

(11) **EP 4 292 439 A1**

(12) **EUROPEAN PATENT APPLICATION**
published in accordance with Art. 153(4) EPC

(43) Date of publication:
**20.12.2023  Bulletin 2023/51**

(21) Application number: **22752840.3**

(22) Date of filing: **10.02.2022**

(51) International Patent Classification (IPC):
*A23J 3/00* (2006.01)      *A23J 3/14* (2006.01)
*A23L 13/00* (2016.01)     *A23L 29/00* (2016.01)
*A23L 29/231* (2016.01)    *A23L 33/10* (2016.01)

(52) Cooperative Patent Classification (CPC):
**A23J 3/00; A23J 3/14; A23L 13/00; A23L 29/00;
A23L 29/231; A23L 33/10**

(86) International application number:
**PCT/JP2022/005477**

(87) International publication number:
**WO 2022/173018 (18.08.2022 Gazette 2022/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **10.02.2021   JP 2021019654
                25.06.2021   JP 2021106077**

(71) Applicant: **Amano Enzyme Inc.**
**Nagoya-shi**
**Aichi 460-8630 (JP)**

(72) Inventor: **SAKAI, Kiyota**
**Kakamigahara-shi, Gifu 509-0109 (JP)**

(74) Representative: **Müller-Boré & Partner**
**Patentanwälte PartG mbB**
**Friedenheimer Brücke 21**
**80639 München (DE)**

(54) **METHOD FOR MANUFACTURING CROSSLINKED PROTEIN**

(57)    The purpose of the present invention is to provide a new processing technique to increase the crosslinkability of a plant protein material. In this invention, causing polysaccharides and multi-copper oxidase to act on a plant protein can increase the crosslinking effect of the plant protein.

**Description**

TECHNICAL FIELD

The present invention relates to a method for manufacturing a crosslinked protein. More specifically, the present invention relates to a processing technique for enhancing the crosslinkability of a plant protein.

BACKGROUND ART

In recent years, in the food product markets, the share of a plant meat-like food material called a meat substitute has increased. Such a meat-like food material has been used for some target consumers such as vegetarian or vegan, but the trend of demand has changed in recent years, and attention has been paid again in response to an increase in awareness of health consciousness, diet, environmental problems, animal welfare, and the like.

Therefore, in order to manufacture a food imitating a processed food product of minced meat of livestock such as a hamburger steak using a meat-like food material, various techniques for binding the meat-like food material have been studied. For example, Patent Document 1 discloses a method for manufacturing a meat-like food product containing a granular soybean protein, a separated soybean protein, and a predetermined cation, in which a cation having a weight ratio to the separated soybean protein of 0.005 to 0.1 and including a divalent cation of 0.01 or less is subjected to humidity control mixing and molding, and the mixture is heated and bound by microwave irradiation so that a moisture content is 40 to 70%, for the purpose of making it possible to manufacture a meat-granular protein-containing food product which does not lose its shape even after cooking and has an elastic feeling. Patent Document 2 discloses a method for manufacturing a meat-granular protein-containing food product in which a granular defatted soybean protein, which is obtained by rehydrating or hot-tempering a dry granular defatted soybean protein using a weak alkaline solution, is mixed with egg white or egg white powder, for the purpose of manufacturing a meat-granular protein-containing food product which does not lose its shape even after cooking and has juiciness and an elastic feeling. Patent Document 3 discloses that cellulose ethers having thermoreversible gelation characteristics such as methyl cellulose are used for processed food products in order to impart them with a function such as binding properties and shape retention properties, and are used when a burger patty or a sausage is manufactured as an analog of meat using plant-based raw materials.

Meanwhile, various techniques for modifying untextured plant protein materials of a powder form, a paste form, a milk form, and the like have been studied. For example, Patent Document 4 discloses a method for crosslinking a protein by a multi-copper oxidase including laccase, bilirubin oxidase, ascorbic acid oxidase, cellulose plasmin, and the like.

PRIOR ART DOCUMENT

PATENT DOCUMENTS

Patent Document 1: WO 2010/119985 A
Patent Document 2: Japanese Patent Laid-open Publication No. 2013-009617
Patent Document 3: Japanese Patent Laid-open Publication No. 2020-029571
Patent Document 4: Japanese Patent Laid-open Publication No. H11-276162

SUMMARY OF THE INVENTION

PROBLEMS TO BE SOLVED BY THE INVENTION

Since the meat-like food material contains a plant protein as a raw material, the meat-like food material is still inferior to the meat food product in at least any characteristics such as binding properties, juiciness, that is, liquid retainability, digestion rate, and yield in processing (hereinafter, also referred to as "meat-like characteristics"). The processing technique of the meat-like food material has been improved for the purpose of reproducing the meat-like characteristics at a level closer to the meat food product but is still developing, and there are many cases where manufacturing methods have many restrictions and the resulting meat-like characteristics are not sufficient, so that there is still room for improvement. Even if there is a technique capable of exhibiting meat-like characteristics to some extent, a technique capable of further enhancing the characteristics is desired in order to follow the diversification of food products using meat substitutes.

The present inventor has predicted that it is useful to enhance the crosslinkability of the textured plant protein material in order to enhance the meat-like characteristics, such as binding properties, liquid retainability, digestion rate, and yield in processing, of the plant protein. In this regard, an attempt was made to treat the textured plant protein material using laccase which is a multi-copper oxidase having a protein crosslinking activity, but the effect of enhancing the meat-like characteristics was not observed at all. This is considered to be because the multi-copper oxidase alone does not exhibit a protein crosslinking effect high enough to exhibit the effect of enhancing the meat-like characteristics. Therefore, an object of the present invention is to provide a processing technique for enhancing the crosslinkability of a plant protein.

MEANS FOR SOLVING THE PROBLEM

The present inventor has found that when a polysaccharide such as pectin or methyl cellulose is used in combination with the laccase which is a multi-copper oxidase having a protein crosslinking activity, the crosslinkability of the plant protein is remarkably enhanced, and further, when such finding is applied to the textured plant protein material and a meat-like processed food product (meat substitute food product) is cooked, the meat-like characteristics, such as binding properties, liquid retainability, digestion rate, and yield in processing, of the resulting meat-like processed food product are enhanced. In view of the fact that the polysaccharide itself does not have a protein crosslinking effect, and that a target to be crosslinked with the laccase is a protein and the characteristics (for example, thickening) of the polysaccharide cannot be enhanced when the laccase coexists with the polysaccharide, it was completely unexpected that the crosslinkability of the plant protein material is remarkably enhanced by combining these components, and the crosslinkability improving effect can be obtained to such an extent that the meat-like characteristics of the meat-like processed food product are enhanced when the meat-like processed food product is manufactured by applying such finding to the textured plant protein material. The present inventors have conducted further studies based on the findings, leading to the completion of the present invention. That is, the present invention provides inventions of the following aspects.

Item 1. A method for manufacturing a crosslinked plant protein, the manufacturing method including a step of causing a polysaccharide and a multi-copper oxidase to act on a plant protein.

Item 2. The manufacturing method described in item 1, in which the polysaccharide is a thermally irreversible gelling agent.

Item 3. The manufacturing method described in item 1 or 2, in which the thermally irreversible gelling agent is pectin.

Item 4. The manufacturing method described in any one of items 1 to 3, in which in the step, a compound selected from the group consisting of betalain, anthocyan, curcuminoid, polyhydroxychalcone, and polyhydroxyanthraquinone is further caused to act.

Item 5. The manufacturing method described in any one of items 1 to 3, in which in the step, a beet dye is further contained.

Item 6. The manufacturing method described in any one of items 1 to 5, in which the multi-copper oxidase is laccase and/or bilirubin oxidase.

Item 7. The manufacturing method described in any one of items 1 to 6, further including a step of causing the polysaccharide and the multi-copper oxidase to act on a textured plant protein material to obtain a meat-like processed food product,

in which the plant protein is contained in the textured plant protein material, and the crosslinked plant protein is contained in the meat-like processed food product.

Item 8. A crosslinking agent for a plant protein, the crosslinking agent containing a polysaccharide and a multi-copper oxidase.

Item 9. The crosslinking agent described in item 8, which is used as a binding property improver for a meat-like processed food product using a textured plant protein material.

Item 10. The crosslinking agent described in item 8, which is used as a texture modifier for a meat-like processed food product using a textured plant protein material.

Item 11. The crosslinking agent described in item 8, which is used as a liquid retainability improver for a meat-like processed food product using a textured plant protein material.

Item 12. The crosslinking agent described in item 8, which is used as a digestion rate enhancer for a meat-like processed food product using a textured plant protein material.

Item 13. The crosslinking agent described in item 8, which is used as a yield improver in manufacturing of a meat-like processed food product using a textured plant protein material.

Item 14. The binding property improver described in any one of items 8 to 13, further containing a compound selected from the group consisting of betalain, anthocyan, curcuminoid, polyhydroxychalcone, and polyhydroxyanthraquinone.

Item 15. The binding property improver described in any one of items 8 to 13, further containing a beet dye.
Item 16. A meat-like processed food product obtained by the manufacturing method described in item 7.

ADVANTAGES OF THE INVENTION

According to the present invention, there is provided a processing technique for enhancing the crosslinkability of a plant protein. By applying this technique to a textured plant protein material, the meat-like characteristics, such as binding properties, liquid retainability, digestion rate, and yield in processing, of the resulting meat-like processed food product can be enhanced.

BRIEF DESCRIPTION OF THE DRAWINGS

Fig. 1 shows results of confirming, by SDS-PAGE, a crosslinking effect by a combination of a polysaccharide and a multi-copper oxidase according to Test Example 1.
Fig. 2 shows measurement results of hardness of a meat-like processed food product manufactured in Test Example 2.
Fig. 3 shows appearance photographs of the meat-like processed food product manufactured in Test Example 2.
Fig. 4 shows measurement results of hardness of a meat-like processed food product manufactured in Test Example 3.
Fig. 5 shows appearance photographs of the meat-like processed food product manufactured in Test Example 3.
Fig. 6 shows appearance photographs of a meat-like processed food product manufactured in Test Example 5.
Fig. 7 shows appearance photographs of the meat-like processed food product manufactured in Test Example 5.
Fig. 8 shows appearance photographs of the meat-like processed food product manufactured in Test Example 5.
Fig. 9 shows appearance photographs of the meat-like processed food product manufactured in Test Example 5.
Fig. 10 shows appearance photographs of the meat-like processed food product manufactured in Test Example 5.
Fig. 11 shows appearance photographs of the meat-like processed food product manufactured in Test Example 5.
Fig. 12 shows appearance photographs of the meat-like processed food product manufactured in Test Example 5.
Fig. 13 shows appearance photographs of the meat-like processed food product manufactured in Test Example 5.
Fig. 14 shows results of a digestion rate test (free amino nitrogen level) of a meat-like processed food product manufactured in Test Example 7.
Fig. 15 shows results of the digestion rate test (residue amount) of the meat-like processed food product manufactured in Test Example 7.

EMBODIMENTS OF THE INVENTION

1. Method for Manufacturing Crosslinked Plant Protein

A method for manufacturing a crosslinked plant protein of the present invention includes a step of causing a polysaccharide and a multi-copper oxidase to act on a plant protein. Thereby, the crosslinkability of the plant protein can be enhanced. In a preferred embodiment of the present invention, in the step, a compound selected from the group consisting of betalain, anthocyan, curcuminoid, polyhydroxychalcone, and polyhydroxyanthraquinone can also be further caused to act. When the method for manufacturing a crosslinked plant protein of the present invention is applied to a textured plant protein material to manufacture a meat-like processed food product, the crosslinkability of the plant protein in the material is enhanced, whereby the meat-like characteristics of the resulting meat-like processed food product can be improved. Hereinafter, the method for manufacturing a crosslinked plant protein of the present invention will be specifically described.

1-1. Plant Protein

The origin of the plant protein is not particularly limited, and examples thereof include pulses such as soybean, fava bean, pea, chickpea, green bean, lupine bean, and kidney bean; cereals such as barley, rice, wheat, rye, oats, buckwheat, Japanese barnyard millet, foxtail millet, teff, quinoa, and corn; nuts and seeds such as hemp (industrial hemp), canary seed, linseed, almond, cashew nut, hazelnut, pecan nut, macadamia nut, pistachio, walnut, brazil nut, peanut, coconut, pilinut, chestnut, sesame, and pine nut; and algae.
In the present invention, as the plant protein, one kind of the above-described plant proteins may be contained alone, or two or more kinds thereof may be contained. Among these plant proteins, from the viewpoint of further improving the crosslinkability of the plant protein and from the viewpoint of further enhancing meat-like characteristics when the manufacturing method of the present invention is used for the manufacturing a meat-like processed food product using a textured plant protein material, proteins of pulses and proteins of cereals are preferable, soybean protein, pea protein, and wheat protein are more preferable, and soybean protein and pea protein are further preferable.

The form of the plant protein used in the present invention is not particularly limited. For example, the plant protein may be in a powder form or in a textured form. In the present invention, in the case of using a powdered plant protein, the powdered plant protein can be used in a state of being dispersed in water. In the present invention, in the case of using a textured plant protein ("textured plant protein material" described below), the textured plant protein material can be used in a state of being swollen in water.

When the form of the plant protein used in the present invention is in a textured form, the plant protein is more specifically used in the form of a textured plant protein material. The textured plant protein material is known as a meat substitute (pseudo meat), and typical examples thereof include a material in which a raw material mixture containing a plant protein and water is extruded with an extruder or the like and dried or frozen to be texturized like meat.

Examples of the form of the textured plant protein material include a granular form and a fibrous form. Examples of the granular form include massive forms having various sizes such as a small grain type, a large grain type, and a block type (the size increases in the order of the small grain type, the large grain type, and the block type); and flat forms of various sizes such as a flake type, a fillet type, and a slice type (the size increases in the order of the flake type, the fillet type, and the slice type).

More specific examples of the textured plant protein material include a granular plant protein and a fibrous plant protein. Both the granular plant protein and the fibrous plant protein refer to those defined in "Japanese Agricultural Standards of Vegetable Protein". However, the textured plant protein material used in the present invention is not limited thereto as long as it is a material texturized like meat as described above.

The content of the plant protein contained in the textured plant protein material (based on a dry state of the textured plant protein material) is not particularly limited, but is, for example, 30 wt% or more, 35 wt% or more, or 40 wt% or more. From the viewpoint of further enhancing the effect of improving the meat-like characteristics, the content is preferably 43 wt% or more, more preferably 45 wt% or more, and further preferably 50 wt% or more. The upper limit of the content range is not particularly limited, and is, for example, 90 wt% or less and preferably 80 wt% or less.

The textured plant protein material can contain other raw materials and/or food additives as necessary in addition to the plant protein. These other raw materials and/or food additives can be selected according to, for example, the type of "1-6. Meat-Like Processed Food Product" described below. Examples of other raw materials include components derived from food raw materials containing the above-described plant protein and inevitably coexisting, edible plant fats and oils, extract concentrates of animals and plants, and protein hydrolysates. The food additive is not particularly limited as long as it is sitologically acceptable, and examples thereof include texture improver such as calcium sulfate; seasonings such as dietary salt, sugar, spices, sodium L-glutamate, disodium 5'-ribonucleotide, disodium 5'-inosinate, and disodium 5'-guanylate; colorants such as caramel I, caramel III, caramel IV, and cocoa (excluding "1-4. Predetermined Compound" described below); antioxidants such as L-ascorbic acid; and fragrances.

Regarding the textured plant protein material that can be used in the present invention, the kind of the plant protein, the characteristics other than the content ratio of the plant protein (for example, properties, moisture content, grain size, product temperature, raw materials other than food additives, food additives, chewiness, water retentivity, foreign matters, and content amount), and the measurement method thereof can conform to the characteristics and the measurement method defined in "Japanese Agricultural Standards of Vegetable Protein".

1-2. Polysaccharide

The polysaccharide used in the present invention is not particularly limited, but a thickening polysaccharide (gelling agent) is usually used. The thickening polysaccharide may be either a thermally irreversible gelling agent or a thermally reversible gelling agent.

Examples of the thermally irreversible gelling agent include pectin, gellan gum, glucomannan, and alginic acid and salts thereof (alkali metal salts such as sodium salt and alkaline earth metal salts such as calcium salt). Examples of the pectin include HM pectin having an esterification degree (DE) of 50% or more and LM pectin having a DE of less than 50%.

Examples of the thermally reversible gelling agent include methyl cellulose (MC), hydroxypropyl cellulose (HPC), hydroxypropyl methyl cellulose (HPMC), carrageenan, xanthan gum, gelatin, agar, and starch.

These polysaccharides may be used singly or in combination of a plurality of kinds thereof.

Among these polysaccharides, from the viewpoint of further improving the crosslinkability of the plant protein and from the viewpoint of further enhancing the effect of improving the meat-like characteristics when the manufacturing method of the present invention is used for the manufacturing a meat-like processed food product using a textured plant protein material, polysaccharides derived from plant cell walls and derivatives thereof are preferable, a thermally irreversible gelling agent is more preferable, and pectin is further preferable. The origin of pectin is not particularly limited, and examples thereof include citrus peels (such as lemons and oranges), apples, and beets. The beet from which pectin is derived is Beta vulgaris ssp. vulgaris var. Altissima (a beet also called sugar beet).

Among the pectins, from the viewpoint of further improving the crosslinkability of the plant protein and from the viewpoint of further enhancing meat-like characteristics when the manufacturing method of the present invention is used for the manufacturing a meat-like processed food product using a textured plant protein material, a pectin derived from a beet is preferable. Among the pectins, from the viewpoint of further enhancing the crosslinkability, HM pectin is preferable, and HM pectin having a DE of 55% or more is further preferable. Alternatively, among the pectins, from the viewpoint of further enhancing the crosslinkability and from the viewpoint of further enhancing the effect of improving the meat-like characteristics when the manufacturing method of the present invention is used for the manufacturing a meat-like processed food product using a textured plant protein material, pectin containing ferulic acid is preferable, and the content of ferulic acid in the pectin is, for example, 0.3 to 3 wt%, preferably 0.4 to 2 wt%, and further preferably 0.5 to 1 wt%.

From the viewpoint of more strongly feeling the texture (for example, grainy texture), in which the tissue form of the textured plant protein material is felt, of a meat-like processed food product obtained when the manufacturing method of the present invention is used for the manufacturing a meat-like processed food product using a textured plant protein material, a thermally irreversible gelling agent is preferable, pectin is more preferable, HM pectin is further preferable, and HM pectin having a DE of 55% or more is even more preferable. Alternatively, among the pectins, from the viewpoint of more strongly feeling the texture (for example, grainy texture), in which the tissue form of the textured plant protein material is felt, of the resulting meat-like processed food product, pectin containing ferulic acid is preferable, and the content of ferulic acid in the pectin is, for example, 0.3 to 3 wt%, preferably 0.4 to 2 wt%, and further preferably 0.5 to 1 wt%.

The used amount of the polysaccharide is not particularly limited, but the amount of the polysaccharide per 100 parts by weight of the plant protein is, for example, 0.5 to 30 parts by weight, and preferably 2 to 15 parts by weight from the viewpoint of further enhancing the crosslinkability of the plant protein.

When the manufacturing method of the present invention is used for the manufacturing a meat-like processed food product using a textured plant protein material, the used amount of the polysaccharide is, for example, 0.02 to 20 parts by weight as the amount of the polysaccharide per 100 parts by weight of the textured plant protein material (swollen with water). From the viewpoint of further enhancing the effect of improving the meat-like characteristics, the amount of the polysaccharide per 100 parts by weight of the textured plant protein material (swollen with water) is preferably 0.2 to 6 parts by weight, and more preferably 0.7 to 4.5 parts by weight, 1.0 to 4 parts by weight, or 1.5 to 3.5 parts by weight. The state where the textured plant protein material is swollen with water refers to a state where the textured plant protein material absorbs water to a saturated state.

1-3. Multi-Copper Oxidase

The multi-copper oxidase used in the present invention is a group of enzymes containing a plurality of copper atoms in a molecule and oxidizing polyphenol, methoxyphenol, diamine, bilirubin, ascorbic acid, and the like with molecular oxygen. The number of included copper atoms is usually 2 to 8 as known so far, but this number is not particularly limited because it varies depending on the state of the enzyme preparation at the time of analysis and the analysis method. Examples of the enzyme classified as the multi-copper oxidase include laccase, bilirubin oxidase, ascorbic acid oxidase, and cellulose plasmin.

These multi-copper oxidases may be used singly or in combination of a plurality of kinds thereof. Among these multi-copper oxidases, from the viewpoint of further enhancing the crosslinkability of the plant protein and from the viewpoint of further enhancing the effect of improving the meat-like characteristics when the manufacturing method of the present invention is used for the manufacturing a meat-like processed food product using a textured plant protein material, laccase is preferable.

The laccase is an enzyme having phenol oxidase activity (EC1.10.3.2). Specific examples of the laccase include laccases derived from microorganisms such as fungi and bacteria, and more specific examples thereof include laccases derived from the genera Aspergillus, Neurospora, Podospora, Botrytis, Collybia, Fomes, Lentinus, Pleurotus, Pycnoporus, Pyricularia, Trametes, Rhizoctonia, Rigidoporus, Coprinus, Psatyrella, Myceliophtera, Schtalidium, Polyporus, Phlebia, Coriolus, and the like.

These laccases may be used singly or in combination of a plurality of kinds thereof. Among these laccases, from the viewpoint of further enhancing the crosslinkability of the plant protein and from the viewpoint of further enhancing the effect of improving the meat-like characteristics when the manufacturing method of the present invention is used for the manufacturing a meat-like processed food product using a textured plant protein material, a laccase derived from the genus Trametes and a laccase derived from the genus Aspergillus (more preferably a laccase derived from Aspergillus oryzae) are preferable, and a laccase derived from the genus Trametes is further preferable.

The used amount of the multi-copper oxidase is not particularly limited, but the amount of the multi-copper oxidase per 1 g of the plant protein is, for example, 5 to 5,000 U, and preferably 10 to 1,000 U from the viewpoint of further enhancing the crosslinkability of the plant protein.

When the manufacturing method of the present invention is used for the manufacturing a meat-like processed food product using a textured plant protein material, the used amount of the multi-copper oxidase is, for example, 1 to 500 U as the amount of the multi-copper oxidase per 1 g of the textured plant protein material (swollen with water), and preferably 2 to 400 U, and more preferably 3 to 300 U, 4 to 200 U, 5 to 100 U, 7.5 to 75 U, 10 to 50 U, 12.5 to 35 U, or 15 to 25 U, from the viewpoint of further enhancing the effect of improving the meat-like characteristics.

The amount of the multi-copper oxidase per 1 mg of the polysaccharide is, for example, 0.1 to 20 U, and preferably 0.4 to 10 U and more preferably 0.6 to 7 U from the viewpoint of further enhancing the crosslinkability of the plant protein.

The activity of the multi-copper oxidase was measured using 2,2'-Azino-di-[3-ethylbenzthiazoline sulfonate] (ABTS) as a substrate. ABTS was dissolved in a 25 mM citrate buffer solution (pH 3.2) at a concentration of 1.0 mg/ml to prepare a substrate solution. After 3.0 ml of this substrate solution was preheated at 25°C, a 0.1 ml enzyme liquid was then added thereto, stirred, and incubated at 25°C, and the absorbance at 405 nm after 1 minute and 3 minutes was measured. The amount of the enzyme that increased the absorbance at 405 nm by 1.0 OD per minute under this condition was defined as 1 unit (U).

1-4. Predetermined compound

In the present invention, for the purpose of further improving the crosslinkability of the plant protein and further improving the meat-like characteristics (particularly binding properties) when the manufacturing method of the present invention is used for the manufacturing a meat-like processed food product using a textured plant protein material, in addition to the polysaccharide and the multi-copper oxidase, a predetermined compound, that is, a compound selected from the group consisting of betalain, anthocyan, curcuminoid, polyhydroxychalcone, and polyhydroxyanthraquinone can be used.

Examples of the betalain include betacyanin and betaxanthin. Examples of the betacyanin include betanin (glycoside of betanidine), betanidine (aglycone of betanin), isobetanin (glycoside of isobetanidine), isobetanidine (aglycone of isobetanin), probetanin, and neobetanin. Examples of the betaxanthin include vulgaxanthin, miraxanthin, portulaxanthin, and indicaxanthin.

Examples of the anthocyan include anthocyanin and anthocyanidin (aglycone of anthocyanin). The anthocyanidin is polyhydroxy-2-phenylbenzopyrylium (a compound in which at least a plurality of phenolic hydroxyl groups are bonded as substituents to 2-phenylbenzopyrylium), and examples thereof include pelargonidin, cyanidin (rubrobracin, aglycone of shisonin), delphinidin, aurantinidin, luteolinidin, peonidin, malvidin, petunidin, europinidin, and rosinidin. Examples of the anthocyanin that is a glycoside of anthocyanidin include rubrobracin (glycoside of cyanidin), shisonin (glycoside of cyanidin), and malonylshisonin (shisonin to which malonic acid is bonded).

Examples of the curcuminoid include curcumin, demethoxy curcumin, and bisdemethoxycurcumin.

Examples of the polyhydroxychalcone (a compound in which at least a plurality of phenolic hydroxyl groups are bonded as substituents to chalcone) include safflomin and carthamin.

Examples of the polyhydroxyanthraquinone (a compound in which at least a plurality of phenolic hydroxyl groups are bonded as substituents to anthraquinone) include carminic acid.

The predetermined compound may be a chemically synthesized product or a natural product. When the compound is a natural product, its origin is also not particularly limited. Examples of the origin include plants such as beet (refers to Beta vulgaris ssp. vulgaris var. Vulgaris (a beet, also referred to as a table beet, a red beet, or a beet root)), red radish, purple yam, red perilla, purple cabbage, safflower, and turmeric; and organisms such as insects. More specifically, examples of the natural product that provides the above compound include natural dyes such as a beet dye (including, as betalain, betanin, isobetanin, betanidine, and isobetanidine; including, as other dyes, phyllocactin, hylocerenin, amaranthin, gomphlrenin-I,II,III, iresinin, and celosianin-I,II), a red radish dye (including, as anthocyan, pelargonidin and cyanidin), a purple yam dye (including, as anthocyan, cyanidin and peonidin), a red perilla dye (including, as anthocyan, shisonin and malonylshisonin), a purple cabbage dye (including, as anthocyan, rubrobracin), a safflower dye (including, as polyhydroxychalcone, safflomin and carthamin), a turmeric dye (including, as curcuminoid, curcumin), and a cochineal dye (including, as polyhydroxyanthraquinone, carminic acid).

The predetermined compound may be used singly or in combination of a plurality of kinds thereof.

Among the predetermined compounds, from the viewpoint of further enhancing the crosslinkability of the plant protein and from the viewpoint of further improving the meat-like characteristics (particularly binding properties) when the manufacturing method of the present invention is used for the manufacturing a meat-like processed food product using a textured plant protein material, betalain is preferable, and betanin, betanidine, isobetanin, and isobetanidine are more preferable.

In order to use the predetermined compound, the natural dye itself can be used. A natural dye itself (that is, a natural dye isolated from the above-described organism) may be used, an extract containing the dye compound of an organism containing the dye compound may be used, or an organism containing the dye compound itself may be used. In the case of using these isolated natural dye, extract, and/or organism themselves, the isolated natural dye, extract, and organism themselves may be used singly or in combination of a plurality of kinds thereof. Among these isolated natural dyes, extracts, and organisms themselves, from the viewpoint of further enhancing the crosslinkability of the plant protein and from the viewpoint of further improving the meat-like characteristics (particularly binding properties) when the manufacturing method of the present invention is used for the manufacturing a meat-like processed food product using a textured plant protein material, a beet dye, a beet extract, and a beet are preferable, a beet extract and a beet are more preferable, and a beet is further preferable.

The used amount of the predetermined compound is not particularly limited, but the amount of the predetermined compound per 100 parts by weight of the plant protein is, for example, 0.00005 to 1 part by weight, and preferably 0.0005 to 0.7 parts by weight from the viewpoint of further enhancing the crosslinkability of the plant protein. When the manufacturing method of the present invention is used for the manufacturing a meat-like processed food product using a textured plant protein material, the amount of the predetermined compound per 100 parts by weight of the textured plant protein material (swollen with water) is, for example, 0.00001 to 0.1 parts by weight, and preferably 0.0001 to 0.07 parts by weight, more preferably 0.0003 to 0.04 parts by weight, and further preferably 0.0005 to 0.02 parts by weight from the viewpoint of further improving the meat-like characteristics (particularly binding properties) in the meat-like processed food product.

Alternatively, when the predetermined compound is a natural product derived from the organism described above, the amount of the predetermined compound per 100 parts by weight of the plant protein is, for example, 0.05 to 100 parts by weight in terms of the dry weight of the organism serving as a raw material, and is preferably 0.5 to 70 parts by weight from the viewpoint of further enhancing the crosslinkability of the plant protein. When the manufacturing method of the present invention is used for the manufacturing a meat-like processed food product using a textured plant protein material, the amount of the predetermined compound per 100 parts by weight of the textured plant protein material (swollen with water) is, for example, 0.01 to 10 parts by weight in terms of the dry weight of the organism serving as a raw material, and is preferably 0.1 to 7 parts by weight, more preferably 0.3 to 4 parts by weight, and further preferably 0.5 to 2 parts by weight from the viewpoint of further improving the meat-like characteristics (particularly binding properties) in the meat-like processed food product.

The used amount of the predetermined compound per 1 part by weight of the polysaccharide is, for example, 0.0001 to 0.1 parts by weight, preferably 0.001 to 0.01 parts by weight, and more preferably 0.003 to 0.007 parts by weight. When the predetermined compound is a natural product derived from the organism described above, the amount of the predetermined compound per 1 part by weight of the polysaccharide is, for example, 0.01 to 10 parts by weight, preferably 0.1 to 1 part by weight, and more preferably 0.3 to 0.7 parts by weight, in terms of the dry weight of the organism serving as a raw material.

1-5. Reaction Operation and Conditions, etc.

In the step of causing a polysaccharide and a multi-copper oxidase (optionally, further a predetermined compound) to act on a plant protein, a plant protein mixture containing a plant protein material, a polysaccharide, a multi-copper oxidase, and optionally, further a predetermined compound in water is appropriately prepared, and a reaction for improving crosslinkability is allowed to proceed.

When the manufacturing method of the present invention is used for the manufacturing a meat-like processed food product using a textured plant protein material, a mixture containing a textured plant protein material in a state of being swollen with water, a polysaccharide, a multi-copper oxidase, and optionally, further a predetermined compound is prepared, and a reaction for improving meat-like characteristics based on crosslinkability is allowed to proceed.

In the case of containing the textured plant protein material, powdered pea protein can be further mixed with the mixture for the purpose of further improving the binding properties. The used amount of the powdered pea protein is, for example, 5 to 20 parts by weight and preferably 10 to 13 parts by weight per 100 parts by weight of the textured plant protein material (swollen with water).

A base material, a binder, and/or other food materials can be mixed with the mixture in the case of containing the textured plant protein material, as necessary. Examples of the base material include water (other than water impregnated into the swollen textured plant protein material) and/or oil. As the binder, one or two or more kinds from breadcrumbs, starch, eggs, and the like can be used. The other food materials can be appropriately determined by those skilled in the art according to the type of the meat-like processed food product, and examples thereof include plants. In the case of using water and oil as a base material, from the viewpoint of enhancing water retentivity among the liquid retainability, the used amount of water per 1 part by weight of oil is preferably 0.5 to 6 parts by weight, more preferably 1 to 4 parts by weight, and further preferably 1.5 to 2.5 parts by weight. In the case of using water and oil as a base material, from the viewpoint of enhancing oil retentivity among the liquid retainability, the used amount of oil per 1 part by weight of water is preferably 0.2 to 2 parts by weight, more preferably 0.4 to 1.5 parts by weight, and further preferably 0.8 to 1.1 parts by weight.

The treatment temperature of the mixture can be appropriately determined in consideration of the optimum temperature of the multi-copper oxidase and the like, and is, for example, 4 to 80°C and preferably 15 to 70°C. The treatment time is not particularly limited, and is, for example, 0.1 to 18 hours and preferably 0.2 to 3 hours. In the manufacturing method of the present invention, the crosslinking effect can be effectively exhibited even under inherently disadvantageous reaction conditions in which an effective crosslinking effect cannot be exhibited by using the multi-copper oxidase alone. From such a viewpoint, suitable examples of the treatment temperature of the mixture include 15 to 45°C, more preferably 15 to 35°C, further preferably 15 to 30°C, and even more preferably non-heating conditions (room temperature, preferably 15 to 25°C), and suitable examples of the treatment time include 0.5 to 1.5 hours and further preferably 0.8 to 1.2 hours.

The processed mixture containing a textured plant protein material can be molded in a shape suitable for a desired form of the meat-like processed food product and heat-cooked to obtain a meat-like processed food product.

The heat-cooking method can be appropriately determined by those skilled in the art according to the type of the meat-like processed food product. Specific examples of the heat-cooking method include boiling, firing (roasting, toasting, baking, grilling, or broiling), steaming, and frying. These heat-cooking methods may be used singly or in combination of a plurality of kinds thereof.

1-6. Meat-Like Processed Food Product

When the manufacturing method of the present invention is used for the manufacturing a meat-like processed food product using a textured plant protein material, the resulting meat-like processed food product (meat substitute food product) is improved in at least any one of meat-like characteristics such as binding properties, liquid retainability, digestion rate, and yield in processing, as compared with the case of manufacturing a meat-like processed food product without using a polysaccharide and/or a multi-copper oxidase.

A specific form of the meat-like processed food product is not particularly limited, and the meat-like processed food product can conform to a meat processed food product prepared by molding and heating a meat species using minced meat. Specific examples thereof include a hamburger steak, a meat ball, a patty, a meat loaf, and a minced cutlet.

2. Crosslinking Agent for Plant Protein

The polysaccharide can improve the crosslinkability of the plant protein by the multi-copper oxidase. Therefore, the present invention also provides a crosslinking agent for a plant protein, the crosslinking agent containing a polysaccharide and a multi-copper oxidase. From the viewpoint of further enhancing the crosslinkability, the crosslinking agent of the present invention preferably includes a compound selected from the group consisting of betalain, anthocyan, curcuminoid, polyhydroxychalcone, and polyhydroxyanthraquinone, more preferably includes betalain, further preferably includes a beet dye, a beet extract and/or a beet, and even more preferably includes a beet.

Since the polysaccharide and the multi-copper oxidase exhibit excellent plant protein crosslinkability, in the case of applying the polysaccharide and the multi-copper oxidase to a textured plant protein material, in the resulting meat-like processed food product, the meat-like characteristics can be improved as the crosslinkability of the plant protein is improved. Examples of such meat-like characteristics include binding properties, liquid retainability, digestion rate, and yield in processing.

Therefore, the crosslinking agent of the present invention can be used as a binding property improver for a meat-like processed food product using a textured plant protein material. The binding properties of a meat-like processed food product using a textured plant protein material can be quantitatively confirmed by measuring the hardness when the textured plant protein material is processed into a meat-like processed food product. The greater the hardness is, the higher the binding properties are.

Since the crosslinking agent of the present invention can improve the binding properties of a meat-like processed food product using a textured plant protein material, the crosslinking agent can also be used as a texture modifier for a meat-like processed food product using a textured plant protein material. Specifically, in the case of using a thermally irreversible gelling agent as the polysaccharide, the crosslinking agent can be effectively used as the texture modifier. In this case, the improvement in the texture of a meat-like processed food product using a textured plant protein material can be confirmed by the fact that the texture of the meat-like processed food product is closer to the texture of a general meat processed food product because of the combination of the texture in which the tissue form of the textured plant protein material is felt and the elasticity of the food product due to binding, as compared with a meat-like processed food product not using a thermally irreversible gelling agent and/or a multi-copper oxidase.

A crosslinkability improver of the present invention can be used as a liquid retainability improver for a meat-like processed food product using a textured plant protein material. The liquid retainability includes water retentivity and oil retentivity. The liquid retainability of a meat-like processed food product using a textured plant protein material can be quantitatively confirmed by measuring a difference in weight before and after the centrifugation of the meat-like processed food product. The smaller the weight difference is, the greater the liquid retainability is.

The crosslinkability improver of the present invention can be used as a digestion rate enhancer for a meat-like processed food product using a textured plant protein material. The digestion rate of a meat-like processed food product using a textured plant protein material can be quantitatively confirmed by digesting the meat-like processed food product for a predetermined time in an environment imitating the stomach (under temperature conditions corresponding to body temperature in an artificial gastric fluid), and measuring free amino nitrogen and residues after digestion. The higher the free amino nitrogen after digestion within a predetermined time is, and the lower the residue is, the higher the digestion rate is.

The crosslinkability improver of the present invention can be used as a yield improver in manufacturing of a meat-like processed food product using a textured plant protein material. The meat-like processed food product in the case of using the crosslinkability improver of the present invention as a yield improver is a food product obtained by heat-cooking and preferably a food product obtained by firing. The yield in manufacturing of a meat-like processed food product using a textured plant protein material can be quantitatively confirmed by measuring a difference in weight before and after the heat-cooking of the meat-like processed food product. The smaller the weight difference is, the greater the yield is.

The type, used amount, and the like of the component to be used in the crosslinkability improver for a plant protein are as described in the section of "1. Method for Manufacturing Crosslinked Plant Protein".

EXAMPLES

Hereinafter, the present invention will be specifically described by means of Examples; however, the present invention is not to be construed as being limited to the following Examples.

[Materials Used]

[Table 1]

| Material | Product name | Manufacturer |
|---|---|---|
| Granular (small granular) soybean protein | Soy Meat Minced Type<br>Content of protein in dry material: 50 wt% | Marukome Co., Ltd. |
| Fillet type soybean protein | Soy Meat Fillet Type<br>Content of protein in dry material: 49.2 wt% | Marukome Co., Ltd. |
| Block type soybean protein | Soy Meat (block)<br>Content of protein in dry material: 61.4 wt% | Asahishokuhin Corp. |
| Slice type soybean protein | Content of protein in dry material: 50 wt% | Marukome Co., Ltd. |
| Granular (small granular) pea protein | TPP<br>Content of protein in dry material: 80 wt% | PURIS |
| Large granular pea protein | Texture Pea Protein | Sansho Co., Ltd. |
| Slice type pea protein | Yasaiga Marude Oniku (vegetable like meat)<br>Content of protein in dry material: 37 wt% | AJIGEN Co., Ltd. |
| Slice type gluten | Gluten Meat Block Type<br>Content of protein in water-swollen material: 17.5% | Saniku Foods Co., Ltd. |
| Soybean protein (powder) | Soypro (crude protein: 50 wt%) | J-OIL MILLS, INC. |
| Powdered pea protein | NUTRALYS F85M | Roquette Frères |
| Methyl cellulose | METOLOSE MCE-100TS (ED: 55% or more) | Shin-Etsu Chemical Co., Ltd. |

(continued)

| Material | Product name | Manufacturer |
|---|---|---|
| Pectin (derived from beet[*1])[*2] | GENU pectin type BETA BI-J | Sansho Co., Ltd. |
| Beet[*3] dry powder | KUMAMOTO RED BEET | Asagiri Farm |
| Laccase | Laccase Y120 (derived from Trametes sp.) | Amano Enzyme Inc. |
| (*1) Beta vulgaris ssp. vulgaris var. Altissima <br> (*2) 0.5 to 1 wt% of ferulic acid is contained. <br> (*3) Beta vulgaris ssp. vulgaris var. Vulgaris | | |

[Laccase Activity Value Measurement Method]

The enzyme activity of the laccase was measured by the method described below using 2,2'-Azino-di-[3-ethylbenzthiazoline sulfonate] (ABTS, manufactured by Boehringer Mannheim) as a substrate.

ABTS was dissolved in a 25 mM citrate buffer solution (pH 3.2) at a concentration of 1.0 mg/ml to prepare a substrate solution. In a cuvette, 3.0 ml of this substrate solution was placed and preheated at 25°C, a 0.1 ml enzyme liquid was then added thereto, stirred, and incubated at 25°C, and the absorbance at 405 nm after 1 minute and 3 minutes was measured. The amount of the enzyme that increased the absorbance at 405 nm by 1.0 OD per minute under this condition was defined as 1 unit (U).

[Test Example 1]

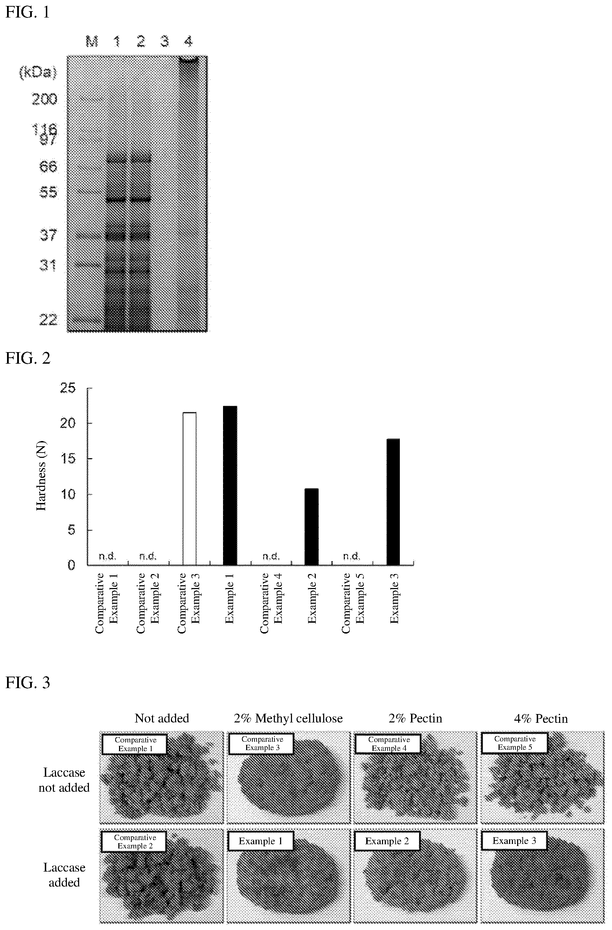

Into a 100 mM phosphate buffer (pH 7.0), materials shown in Table 2 were added in the indicated amounts (provided that, the amount of the laccase is represented by the activity value in 10 mL of the reaction solution) to obtain 10 mL of a solution, and the solution was reacted at 40°C for 60 minutes. After the reaction, the reaction solution was subjected to SDS-PAGE. The crosslinking of proteins and the degree thereof can be confirmed by the presence of a band at the origin in SDS-PAGE and the density of the band. The results are shown in Fig. 1.

[Table 2]

| | Lane 1 | Lane 2 | Lane 3 | Lane 4 |
|---|---|---|---|---|
| Soybean protein (powder) | 10 w/w% | 10 w/w% | - | 10 w/w% |
| Pectin | - | - | 0.5 w/w% | 0.5 w/w% |
| Laccase | - | 100 U | 100 U | 100 U |

As is apparent from Fig. 1, under the reaction condition of about 60 minutes at 40°C, an effective crosslinking reaction was not observed by the laccase alone (Lane 2), and pectin was not crosslinked by the laccase (Lane 3), but an effective crosslinking reaction was observed by using pectin in combination with the laccase (Lane 4).

[Test Example 2: Binding Properties-Granular Soybean Protein]

To 80 g of granular (small granular) soybean protein, hott water (40°C) having a weight of 5 times weight of the granular (small granular) soybean protein was added, and the mixture was left to stand still for 10 minutes to swell to a saturated state. The moisture was removed, and 25 g of each of the swollen granular soybean proteins was weighed. To the weighed granular soybean protein, 2.75 g of powdered pea protein (NUTRALYS F85M manufactured by Roquette Frères) and an additive component selected from methyl cellulose, pectin, and laccase were added in the amount shown in Table 3 to prepare a plant protein mixture. The amount shown in Table 3 means the blending amount in the plant protein mixture. The plant protein mixture was well mixed and molded into a hamburger steak, and the hamburger steak was left to stand still at room temperature for 60 minutes and then fired to obtain a meat-like processed food product.

[Table 3]

| | Comparative Example 1 | Comparative Example 2 | Comparative Example 3 | Example 1 | Comparative Example 4 | Example 2 | Comparative Example 5 | Example 3 |
|---|---|---|---|---|---|---|---|---|
| Swollen granular soybean protein | 25 g | 25 g | 25 g | 25 g | 25 g | 25 g | 25 g | 25 g |
| Methyl cellulose | - | - | 2 w/w% | 2 w/w% | - | - | - | - |
| Pectin | - | - | - | - | 2 w/w% | 2 w/w% | 4 w/w% | 4 w/w% |
| Laccase | - | 0.01 w/w% | - | 0.01 w/w% | - | 0.01 w/w% | - | 0.01 w/w% |

In order to evaluate the degree of binding properties of the granular soybean protein in the obtained meat-like processed food product, the hardness of the meat-like processed food product was measured with a rheometer (manufactured by SUN SCIENTIFIC CO., LTD.). The greater the measured value of hardness is, the greater the degree of binding properties are. When the meat-like processed food product was collapsed, the hardness was determined to be undetectable (n.d.; not detected). The measurement results of the hardness are shown in Fig. 2. An appearance photograph of each meat-like processed food product is shown in Fig. 3.

As shown in Figs. 2 and 3, in the meat-like processed food product without addition of the polysaccharide, the granular soybean protein was collapsed without binding not only in the case of not adding laccase (Comparative Example 1) but also the case of adding laccase (Comparative Example 2). That is, it was recognized that there was no action of binding the granular soybean protein to the laccase itself. In the case of adding methyl cellulose alone (Comparative Example 3), the binding properties of the granular soybean protein were recognized, but in the case of using laccase in combination with methyl cellulose (Example 1), the binding properties of the granular soybean protein were further enhanced although the laccase itself had no binding action (Comparative Example 2). In the case of adding each of 2 wt% of pectin and 4% of pectin alone (Comparative Examples 4 and 5), the granular soybean protein was collapsed without binding, but in the case of using laccase in combination with pectin (Examples 2 and 3), the binding properties of the granular soybean protein were remarkably enhanced although the laccase itself had no binding action (Comparative Example 2).

As a result of evaluating the texture (feeling on a tongue) of the meat-like processed food product in which the binding properties were recognized, in the case of adding methyl cellulose (Comparative Example 3 and Example 1), the meat-like processed food product was in the form of a boiled fish-paste product and had a texture different from that of a general meat processed food product. On the other hand, in the case of adding pectin and laccase (Examples 2 and 3), there was a grainy texture like ground meat, and the texture was similar to that of a general meat processed food product because of the combination of the grainy texture and elasticity of the food product due to binding.

[Test Example 3: Binding Properties and Texture-Granular Pea Protein]

A meat-like processed food product was obtained in the same manner as in Test Example 2, except that granular (small granular) soybean protein was changed to granular (small granular) pea protein. The components used in manufacturing of a meat-like processed food product of this test example and the used amount thereof are shown in Table 4 in the same form as in Table 3.

[Table 4]

| | Comparative Example 6 | Comparative Example 7 | Comparative Example 8 | Example 4 | Comparative Example 9 | Example 5 | Comparative Example 10 | Example 6 |
|---|---|---|---|---|---|---|---|---|
| Swollen granular pea protein | 25 g | 25 g | 25 g | 25 g | 25 g | 25 g | 25 g | 25 g |
| Methyl cellulose | - | - | 2 w/w% | 2 w/w% | - | - | - | - |
| Pectin | - | - | - | - | 2 w/w% | 2 w/w% | 4 w/w% | 4 w/w% |
| Laccase | - | 0.01 w/w% | - | 0.01 w/w% | - | 0.01 w/w% | - | 0.01 w/w% |

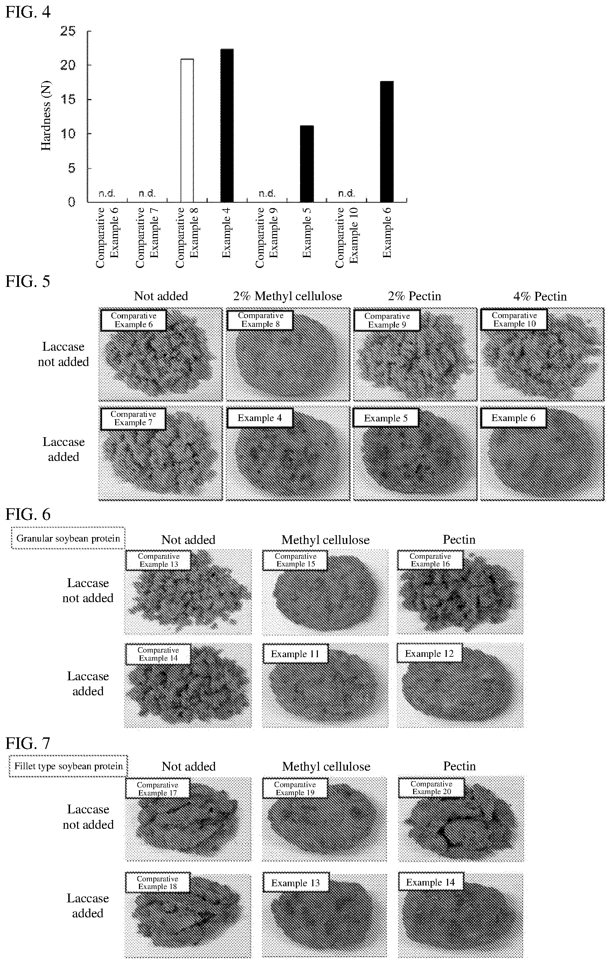

For the obtained meat-like processed food product, measurement of hardness for evaluating the degree of binding properties, photographing of appearance, and evaluation of texture were performed in the same manner as in Test Example 2. The measurement results of the hardness are shown in Fig. 4. An appearance photograph of each meat-like processed food product is shown in Fig. 5.

As shown in Figs. 4 and 5, in the meat-like processed food product without addition of the polysaccharide, the granular pea protein was collapsed without binding not only in the case of not adding laccase (Comparative Example 6) but also the case of adding laccase (Comparative Example 7). That is, it was recognized that there was no action of binding the granular pea protein to the laccase itself. In the case of adding methyl cellulose alone (Comparative Example 8), the binding properties of the granular pea protein were recognized, but in the case of using laccase in combination with methyl cellulose (Example 4), the binding properties of the granular pea protein were further enhanced although the laccase itself had no binding action (Comparative Example 7). In the case of adding each of 2 wt% of pectin and 4% of pectin alone (Comparative Examples 9 and 10), the granular pea protein was collapsed without binding, but in the case of using laccase in combination with pectin (Examples 5 and 6), the binding properties of the granular pea protein were remarkably enhanced although the laccase itself had no binding action (Comparative Example 7).

As a result of evaluating the texture (tongue roughness) of the meat-like processed food product in which the binding properties were recognized, in the case of adding methyl cellulose (Comparative Example 8 and Example 4), the meat-like processed food product was in the form of a boiled fish-paste product and had a texture different from that of a general meat processed food product. On the other hand, in the case of adding pectin and laccase (Examples 5 and 6), there was a grainy texture like ground meat, and the texture was similar to that of a general meat processed food product because of the combination of the grainy texture and elasticity of a food product due to binding.

[Test Example 4: Binding Properties-Granular Pea Protein]

To granular (small granular) pea protein, hot water (40°C) having a weight of 5 times weight of the granular (small granular) pea protein was added, and the mixture was left to stand still for 10 minutes to swell to a saturated state. The moisture was removed, and 25 g of each of the swollen granular pea proteins was weighed. To the weighed granular pea protein, 2.75 g of powdered pea protein was mixed, and beet-dried powder as a beet dye source and an additive component selected from methyl cellulose, pectin, and laccase were added in the amount shown in Table 5 to prepare a plant protein mixture. The amount shown in Table 5 means the blending amount in the plant protein mixture (provided that, the amount of the laccase indicates an activity value per 1 g of the swollen granular pea protein). The plant protein mixture was well mixed and molded into a hamburger steak, and the hamburger steak was left to stand still at room temperature for 60 minutes and then fired to obtain a meat-like processed food product.

For the obtained meat-like processed food product, measurement of hardness for evaluating the degree of binding properties was performed in the same manner as in Test Example 2. The measurement results of the hardness are shown in Table 5.

[Table 5]

| | Comparative Example 11 | Example 7 | Example 8 | Comparative Example 12 | Example 9 | Example 10 |
|---|---|---|---|---|---|---|
| Swollen granular pea protein | 25 g | 25 g | 25 g | 25 g | 25 g | 25 g |
| Methyl cellulose | 2 w/w% | 2 w/w% | 2 w/w% | - | - | - |
| Pectin | - | - | - | 2 w/w% | 2 w/w% | 2 w/w% |
| Beet dry powder | - | - | 1 w/w% | - | - | 1 w/w% |
| Laccase | - | 20 U/g (*) | 20 U/g (*) | - | 20 U/g (*) | 20 U/g (*) |
| Hardness (N) | 18.4 | 22.3 | 23.8 | n.d. | 26.1 | 28.5 |
| (*) Indicating the active value per 1 g of the swollen granular pea protein. | | | | | | |

As shown in Table 5, in the case of adding methyl cellulose or pectin and laccase to the granular pea protein (Examples 7 and 9), the binding properties of the granular pea protein were improved, and the degree thereof was remarkable in the case of using pectin (Example 9). In the case of further adding a beet dye (Examples 8 and 10), the binding properties of the granular pea protein were further improved.

[Test Example 5: Binding Properties-Textured Plant Protein Materials Having Various Shapes and Origins]

To textured plant protein materials having various shapes and origins shown in Tables 6 to 13, hot water (40°C) having a weight of 5 times weights of the textured plant protein materials having various shapes and origins was added, and the mixture was left to stand still for 10 minutes to swell to a saturated state. The moisture was removed, and 25 g of each of the swollen textured plant protein material was weighed. An additive component selected from methyl cellulose, pectin, and laccase was added to the weighed textured plant protein material together with 5 g of water and 5 g of olive oil in the amounts shown in Tables 6 to 13 to prepare a plant protein mixture. The amounts shown in Tables 6 to 13 mean the blending amounts in the plant protein mixture (provided that, the amount of the laccase indicates an activity value per 1 g of the swollen textured plant protein material). The blending amount of methyl cellulose or pectin was 2 parts by weight per 100 parts by weight of the swollen textured plant protein material. The plant protein mixture was well mixed and molded into a hamburger steak, and the hamburger steak was left to stand still at room temperature for 60 minutes and then fired to obtain a meat-like processed food product.

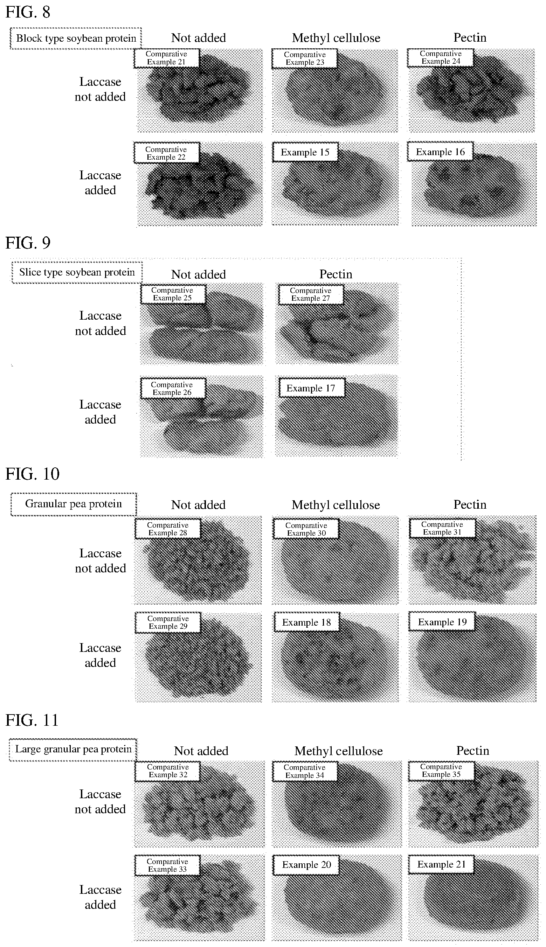

For the obtained meat-like processed food product, measurement of hardness for evaluating the degree of binding properties, and photographing of appearance were performed in the same manner as in Test Example 2. The measurement results of the hardness are shown in Figs. 6 to 13. An appearance photograph of each meat-like processed food product is shown in Figs. 6 to 13.

[Table 6]

|  | Comparative Example 13 | Comparative Example 14 | Comparative Example 15 | Example 11 | Comparative Example 16 | Example 12 |
|---|---|---|---|---|---|---|
| Swollen granular soybean protein | 25 g | 25 g | 25 g | 25 g | 25 g | 25 g |
| Methyl cellulose | - | - | 2 w/w% | 2 w/w% | - | - |
| Pectin | - | - | - | - | 2 w/w% | 2 w/w% |
| Laccase | - | 20 U/g | - | 20 U/g | - | 20 U/g |
| Hardness (N) | 0 | 0 | 19.5 | 22.4 | 0 | 24.9 |

[Table 7]

|  | Comparative Example 17 | Comparative Example 18 | Comparative Example 19 | Example 13 | Comparative Example 20 | Example 14 |
|---|---|---|---|---|---|---|
| Swollen fillet-shaped soybean protein | 25 g | 25 g | 25 g | 25 g | 25 g | 25 g |
| Methyl cellulose | - | - | 2 w/w% | 2 w/w% | - | - |
| Pectin | - | - | - | - | 2 w/w% | 2 w/w% |
| Laccase | - | 20 U/g | - | 20 U/g | - | 20 U/g |
| Hardness (N) | 0 | 0 | 19.2 | 23.3 | 0 | 25.1 |

[Table 8]

|  | Comparative Example 21 | Comparative Example 22 | Comparative Example 23 | Example 15 | Comparative Example 24 | Example 16 |
|---|---|---|---|---|---|---|
| Swollen blocked soybean protein | 25 g | 25 g | 25 g | 25 g | 25 g | 25 g |
| Methyl cellulose | - | - | 2 w/w% | 2 w/w% | - | - |
| Pectin | - | - | - | - | 2 w/w% | 2 w/w% |
| Laccase | - | 20 U/g | - | 20 U/g | - | 20 U/g |
| Hardness (N) | 0 | 0 | 21.2 | 23.3 | 0 | 26.9 |

[Table 9]

|  | Comparative Example 25 | Comparative Example 26 | Comparative Example 27 | Example 17 |
|---|---|---|---|---|
| Swollen sliced soybean protein | 25 g | 25 g | 25 g | 25 g |
| Pectin | - | - | 2 w/w% | 2 w/w% |
| Laccase | - | 20 U/g | - | 20 U/g |
| Hardness (N) | 0 | 0 | 0 | 15.4 |

[Table 10]

|  | Comparative Example 28 | Comparative Example 29 | Comparative Example 30 | Example 18 | Comparative Example 31 | Example 19 |
|---|---|---|---|---|---|---|
| Swollen granular pea protein | 25 g | 25 g | 25 g | 25 g | 25 g | 25 g |
| Methyl cellulose | - | - | 2 w/w% | 2 w/w% | - | - |
| Pectin | - | - | - | - | 2 w/w% | 2 w/w% |
| Laccase | - | 20 U/g | - | 20 U/g | - | 20 U/g |
| Hardness (N) | 0 | 0 | 18.9 | 22.4 | 0 | 26.2 |

[Table 11]

|  | Comparative Example 32 | Comparative Example 33 | Comparative Example 34 | Example 20 | Comparative Example 35 | Example 21 |
|---|---|---|---|---|---|---|
| Swollen large granular pea protein | 25 g | 25 g | 25 g | 25 g | 25 g | 25 g |
| Methyl cellulose | - | - | 2 w/w% | 2 w/w% | - | - |
| Pectin | - | - | - | - | 2 w/w% | 2 w/w% |

(continued)

|  | Comparative Example 32 | Comparative Example 33 | Comparative Example 34 | Example 20 | Comparative Example 35 | Example 21 |
|---|---|---|---|---|---|---|
| Laccase | - | 20 U/g | - | 20 U/g | - | 20 U/g |
| Hardness (N) | 0 | 0 | 24.4 | 28.5 | 0 | 32.3 |

[Table 12]

|  | Comparative Example 36 | Comparative Example 37 | Comparative Example 38 | Example 22 | Comparative Example 39 | Example 23 |
|---|---|---|---|---|---|---|
| Swollen sliced pea protein | 25 g | 25 g | 25 g | 25 g | 25 g | 25 g |
| Methyl cellulose | - | - | 2 w/w% | 2 w/w% | - | - |
| Pectin | - | - | - | - | 2 w/w% | 2 w/w% |
| Laccase | - | 20 U/g | - | 20 U/g | - | 20 U/g |
| Hardness (N) | 0 | 0 | 15.4 | 17.8 | 0 | 20.5 |

[Table 13]

|  | Comparative Example 40 | Comparative Example 41 | Comparative Example 42 | Example 24 | Comparative Example 43 | Example 25 |
|---|---|---|---|---|---|---|
| Swollen sliced gluten protein | 25 g | 25 g | 25 g | 25 g | 25 g | 25 g |
| Methyl cellulose | - | - | 2 w/w% | 2 w/w% | - | - |
| Pectin | - | - | - | - | 2 w/w% | 2 w/w% |
| Laccase | - | 20 U/g | - | 20 U/g | - | 20 U/g |
| Hardness (N) | 0 | 0 | 7.8 | 11.2 | 0 | 16.7 |

As is apparent from Tables 6 to 13, in the meat-like processed food product without addition of the polysaccharide, the textured plant protein material was collapsed without binding not only in the case of not adding laccase but also the case of adding laccase. In the case of adding methyl cellulose alone, the binding properties of the textured plant protein material were recognized, but in the case of using laccase in combination with methyl cellulose, the binding properties of the textured plant protein material were further enhanced although the laccase itself had no binding action. In the case of adding pectin alone, the textured plant protein material was collapsed without binding, but in the case of using laccase in combination with pectin, the binding properties of the textured plant protein material were remarkably enhanced although the laccase itself had no binding action.

[Test Example 6: Yield and Liquid Retainability]

To granular (small granular) soybean protein, hot water (40°C) having a weight of 5 times weight of the granular (small granular) soybean protein was added, and the mixture was left to stand still for 10 minutes to swell to a saturated state. The moisture was removed, and 25 g of each of the swollen granular (small granular) soybean proteins was weighed. Methyl cellulose or pectin having a final concentration of 2 w/w%, water and olive oil in amount shown in Table 14, and 20 U of laccase per 1 g of swollen granular (small granular) soybean protein were added to the weighed granular (small granular) soybean protein to prepare a plant protein mixture. The plant protein mixture was well mixed and molded into a hamburger steak, and the hamburger steak was left to stand still at room temperature for 60 minutes (a product obtained at this stage was "pre-cooking patty"), and then subjected to a firing step to obtain a meat-like processed food product ("post-cooking patty").

In order to evaluate the yield, the weight of each patty before and after cooking was measured to calculate the proportion (%) of cooking loss based on the following formula. The results are shown in Table 14. The smaller the proportion (%) of cooking loss, the better the yield.

[Mathematical Formula 1]

$$\text{Cooking loss } (\%) = (W1 - W2)/W1 \times 100$$

W1: Pre-cooking patty weight (g)
W2: Post-cooking patty weight (g)

In order to evaluate the liquid retainability, 5 g of the fired patty was divided and subjected to centrifugation under the condition of 3000 rpm to discard the supernatant, and the patty after centrifugation was obtained. The water retentivity and the oil retentivity (%) were calculated based on the following formula by measuring the weight of each patty before and after centrifugation. The results are shown in Table 14. The larger the water retentivity and the oil retentivity (%) are, the higher the liquid retainability is, and a juicy texture is obtained.

[Mathematical Formula 2]

$$\text{Water retentivity and oil retentivity } (\%) = 100 - (w1 - w2)/w1 \times 100$$

w1: Weight (g) before centrifugation
w2: Weight (g) after centrifugation

[Table 14]

| - | Addition amount | | | | | Cooking loss (%) | Water retentivity (%) | Oil retentivity (%) |
|---|---|---|---|---|---|---|---|---|
| | Water (g) | Oil (g) | Methyl cellulose (* 1) | Pectin (*1) | Laccase (*2) | | | |
| Comparative Example 44 | 10 | 5 | 2 wp | - | - | 10.4 | 90.3 | |
| Example 26 | | | - | 2 wp | 20 U/g | 5.7 | 95.2 | |
| Comparative Example 45 | 15 | | 2 wp | - | - | 14.6 | 86.2 | |
| Example 27 | | | - | 2 wp | 20 U/g | 5.9 | 92.7 | |
| Comparative Example 46 | 20 | | 2 wp | - | - | 16.8 | 82.2 | |
| Example 28 | | | - | 2 wp | 20 U/g | 6.8 | 91.3 | |
| Comparative Example 47 | 25 | | 2 wp | - | - | 18.9 | 81.7 | |
| Example 29 | | | - | 2 wp | 20 U/g | 9.6 | 90.7 | |
| Comparative Example 48 | 27 | | 2 wp | - | - | 20.2 | 78.5 | |
| Example 30 | | | - | 2 wp | 20 U/g | 10.8 | 89.8 | |

(continued)

| - | Addition amount | | | | | Cooking loss (%) | Water retentivity (%) | Oil retentivity (%) |
| | Water (g) | Oil (g) | Methyl cellulose (* 1) | Pectin (*1) | Laccase (*2) | | | |
|---|---|---|---|---|---|---|---|---|
| Comparative Example 49 | 10 | 8 | 2 wp | - | - | 12 | | 89.5 |
| Example 31 | | | - | 2 wp | 20 U/g | 8.2 | | 94.5 |
| Comparative Example 50 | | 10 | 2 wp | - | - | 14.5 | | 88.8 |
| Example 32 | | | - | 2 wp | 20 U/g | 10.7 | | 93.6 |
| Comparative Example 51 | | 12 | 2 wp | - | - | 18.8 | | 87.3 |
| Example 33 | | | - | 2 wp | 20 U/g | 12.7 | | 92.2 |
| Comparative Example 52 | | 14 | 2 wp | - | - | 21.9 | | 86 |
| Example 34 | | | - | 2 wp | 20 U/g | 13.2 | | 91.8 |
| Comparative Example 53 | | 16 | 2 wp | - | - | 23.9 | | 85.7 |
| Example 35 | | | - | 2 wp | 20 U/g | 15 | | 90.7 |

(*1) Indicating the weight ratio (parts by weight) per 100 parts by weight of the swollen plant protein material, wp indicates weight parts or parts by weight.
(*2) Active value per 1 g of swollen plant protein material

As is apparent from Table 14, in the patty manufactured using pectin and laccase, the cooking loss was reduced, and thus the yield improvement was recognized. As is apparent from Table 14, in the patty manufactured using pectin and laccase, the water retentivity and the oil retentivity were increased, and thus, liquid retainability improvement was recognized.

[Test Example 7: Digestion Rate]

To granular (small granular) soybean protein, hot water (40°C) having a weight of 5 times weight of the granular (small granular) soybean protein was added, and the mixture was left to stand still for 10 minutes to swell to a saturated state. The moisture was removed, and 25 g of each of the swollen granular soybean proteins was weighed. An additive component selected from methyl cellulose, pectin, and laccase was added to the weighed granular soybean protein in the amount shown in Table 15 to prepare a plant protein mixture. The amount shown in Table 15 means the blending amount in the plant protein mixture (provided that, the amount of the laccase indicates an activity value per 1 g of the swollen granular soybean protein). The plant protein mixture was well mixed and molded into a hamburger steak, and the hamburger steak was left to stand still at room temperature for 60 minutes and then fired to obtain a meat-like processed food product (patty).

[Table 15]

| | Comparative Example 54 | Example 36 |
|---|---|---|
| Swollen granular soybean protein | 25 g | 25 g |
| Methyl cellulose | 2 w/w%[(*1)] | - |
| Pectin | - | 2 w/w%[(*1)] |

(continued)

|  | Comparative Example 54 | Example 36 |
| --- | --- | --- |
| Laccase | - | 100 U/g[(*2)] |
| (*1) The weight ratio per 100 parts by weight of the swollen granular soybean protein is 2 parts by weight. (*2) Indicating the active value per 1 g of the swollen granular soybean protein. | | |

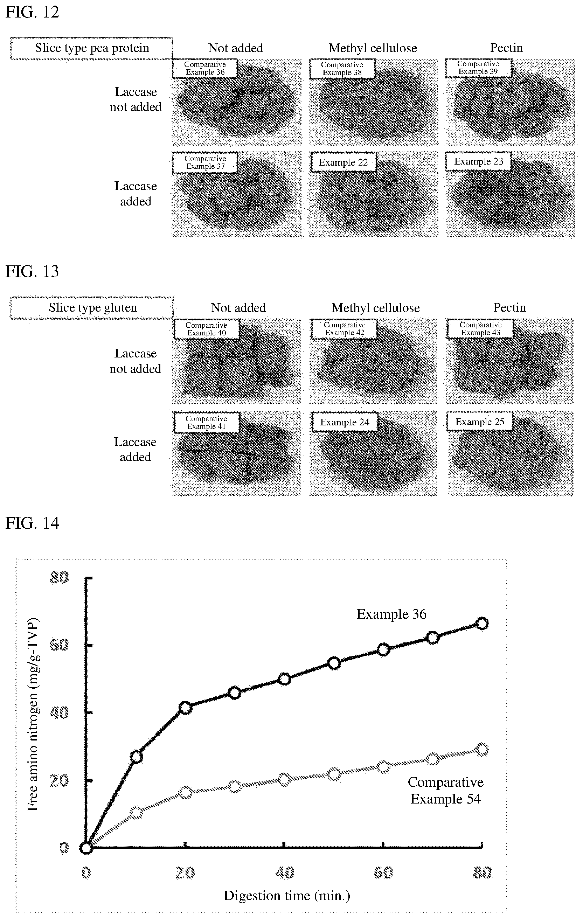

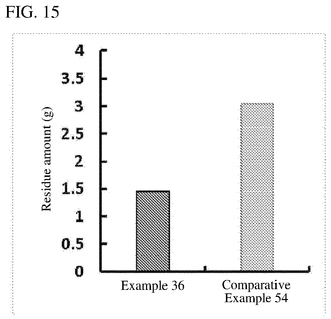

The patty was cut to 5 g, immersed in simulated gastric fluid (77 mL purified water, 13 mL McIlvain buffer solution (pH 5.0), 4.39 g NaCl, 0.22 g KCl, $CaCl_2$ 0.04 g, pepsin having a final concentration of 0.0065%), and reacted at 37°C and 60 rpm for 80 minutes. At that time, 1 N HCl was added every 10 minutes to adjust the pH to 3.0. After completion of the reaction, a boiling treatment and cooling were performed, and the free amino nitrogen level and the residue amount were measured. The results are shown in Figs. 14 and 15.

As shown in Fig. 14, according to the patty of Example 36, the free amino nitrogen level increased to 2 times that of the patty of Comparative Example 54, and as shown in Fig. 15, the residue amount was half that of Comparative Example 54. That is, according to the patty of Example 36, it was confirmed that the digestion rate was improved, and thus it was suggested that the nutrient absorption amount was increased.

**Claims**

1. A method for manufacturing a crosslinked plant protein, the manufacturing method comprising a step of causing a polysaccharide and a multi-copper oxidase to act on a plant protein.

2. The manufacturing method according to claim 1, wherein the polysaccharide is a thermally irreversible gelling agent.

3. The manufacturing method according to claim 1 or 2, wherein the thermally irreversible gelling agent is pectin.

4. The manufacturing method according to any one of claims 1 to 3, wherein in the step, a compound selected from the group consisting of betalain, anthocyan, curcuminoid, polyhydroxychalcone, and polyhydroxyanthraquinone is further caused to act.

5. The manufacturing method according to any one of claims 1 to 3, wherein in the step, a beet dye is further contained.

6. The manufacturing method according to any one of claims 1 to 5, wherein the multi-copper oxidase is laccase and/or bilirubin oxidase.

7. The manufacturing method according to any one of claims 1 to 6, further comprising a step of causing the polysaccharide and the multi-copper oxidase to act on a textured plant protein material to obtain a meat-like processed food product,
   wherein

   the plant protein is contained in the textured plant protein material, and
   the crosslinked plant protein is contained in the meat-like processed food product.

8. A crosslinking agent for a plant protein, the crosslinking agent comprising a polysaccharide and a multi-copper oxidase.

9. The crosslinking agent according to claim 8, which is used as a binding property improver for a meat-like processed food product using a textured plant protein material.

10. The crosslinking agent according to claim 8, which is used as a texture modifier for a meat-like processed food product using a textured plant protein material.

11. The crosslinking agent according to claim 8, which is used as a liquid retainability improver for a meat-like processed food product using a textured plant protein material.

12. The crosslinking agent according to claim 8, which is used as a digestion rate enhancer for a meat-like processed food product using a textured plant protein material.

13. The crosslinking agent according to claim 8, which is used as a yield improver in manufacturing of a meat-like processed food product using a textured plant protein material.

14. The binding property improver according to any one of claims 8 to 13, further comprising a compound selected from the group consisting of betalain, anthocyan, curcuminoid, polyhydroxychalcone, and polyhydroxyanthraquinone.

15. The binding property improver according to any one of claims 8 to 13, further comprising a beet dye.

16. A meat-like processed food product obtained by the manufacturing method according to claim 7.

FIG. 1

FIG. 2

FIG. 3

FIG. 4

FIG. 5

| Not added | 2% Methyl cellulose | 2% Pectin | 4% Pectin |

FIG. 6

Granular soybean protein

| Not added | Methyl cellulose | Pectin |

FIG. 7

Fillet type soybean protein

| Not added | Methyl cellulose | Pectin |

FIG. 8

| Block type soybean protein | Not added | Methyl cellulose | Pectin |
|---|---|---|---|
| Laccase not added | Comparative Example 21 | Comparative Example 23 | Comparative Example 24 |
| Laccase added | Comparative Example 22 | Example 15 | Example 16 |

FIG. 9

| Slice type soybean protein | Not added | Pectin |
|---|---|---|
| Laccase not added | Comparative Example 25 | Comparative Example 27 |
| Laccase added | Comparative Example 26 | Example 17 |

FIG. 10

| Granular pea protein | Not added | Methyl cellulose | Pectin |
|---|---|---|---|
| Laccase not added | Comparative Example 28 | Comparative Example 30 | Comparative Example 31 |
| Laccase added | Comparative Example 29 | Example 18 | Example 19 |

FIG. 11

| Large granular pea protein | Not added | Methyl cellulose | Pectin |
|---|---|---|---|
| Laccase not added | Comparative Example 32 | Comparative Example 34 | Comparative Example 35 |
| Laccase added | Comparative Example 33 | Example 20 | Example 21 |

EP 4 292 439 A1

FIG. 12

| Slice type pea protein | Not added | Methyl cellulose | Pectin |

Laccase not added: Comparative Example 36, Comparative Example 38, Comparative Example 39

Laccase added: Comparative Example 37, Example 22, Example 23

FIG. 13

| Slice type gluten | Not added | Methyl cellulose | Pectin |

Laccase not added: Comparative Example 40, Comparative Example 42, Comparative Example 43

Laccase added: Comparative Example 41, Example 24, Example 25

FIG. 14

Example 36

Comparative Example 54

Free amino nitrogen (mg/g-TVP) vs Digestion time (min.)

FIG. 15

## INTERNATIONAL SEARCH REPORT

| | International application No. |
|---|---|
| | **PCT/JP2022/005477** |

### A. CLASSIFICATION OF SUBJECT MATTER

*A23J 3/00*(2006.01)i; *A23J 3/14*(2006.01)i; *A23L 13/00*(2016.01)i; *A23L 29/00*(2016.01)i; *A23L 29/231*(2016.01)i; *A23L 33/10*(2016.01)i
FI: A23J3/14; A23J3/00 502; A23L13/00 A; A23L29/00; A23L13/00; A23L29/231; A23L33/10

According to International Patent Classification (IPC) or to both national classification and IPC

### B. FIELDS SEARCHED

Minimum documentation searched (classification system followed by classification symbols)

A23J3/00; A23J3/14; A23L13/00; A23L29/00; A23L29/231; A23L33/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2019-140944 A (KITII CORP) 29 August 2019 (2019-08-29) claims 2, 3, 7, 9, paragraphs [0031], [0046] | 1, 7-11, 13, 16 |
| Y | | 5, 15 |
| A | | 2-4, 6, 12, 14 |
| Y | WO 2010/140550 A1 (OCI CO., LTD.) 09 December 2010 (2010-12-09) paragraph [0002] | 5, 15 |
| A | JP 11-276162 A (AMANO PHARMACEUT CO LTD) 12 October 1999 (1999-10-12) claims | 1-16 |
| A | JP 2007-28955 A (MITSUBISHI PAPER MILLS LTD) 08 February 2007 (2007-02-08) paragraphs [0008], [0013], [0106], [0028], [0038] | 1-16 |
| P, X | CN 113647507 A (SHAANXI FUTURE ZHISHAN HEALTH TECHNOLOGY CO., LTD.) 16 November 2021 (2021-11-16) examples | 1, 6-11, 13, 16 |
| P, A | | 2-5, 12, 14, 15 |

☑ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **30 March 2022** | **12 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| International application No. |
| --- |
| **PCT/JP2022/005477** |

**C. DOCUMENTS CONSIDERED TO BE RELEVANT**

| Category* | Citation of document, with indication, where appropriate, of the relevant passages | Relevant to claim No. |
| --- | --- | --- |
| P, X | CN 113519690 A (SHAANXI FUTURE ZHISHAN HEALTH TECHNOLOGY CO., LTD.) 22 October 2021 (2021-10-22) <br> examples | 1, 6-11, 13, 16 |
| P, A | | 2-5, 12, 14, 15 |

Form PCT/ISA/210 (second sheet) (January 2015)

**INTERNATIONAL SEARCH REPORT**
Information on patent family members

International application No.

**PCT/JP2022/005477**

| Patent document cited in search report | | | Publication date (day/month/year) | Patent family member(s) | Publication date (day/month/year) |
|---|---|---|---|---|---|
| JP | 2019-140944 | A | 29 August 2019 | (Family: none) | |
| WO | 2010/140550 | A1 | 09 December 2010 | US 2012/0076902 A1 paragraphs [0002], [0003] | |
| JP | 11-276162 | A | 12 October 1999 | US 6121013 A claims<br>EP 947142 A2 | |
| JP | 2007-28955 | A | 08 February 2007 | (Family: none) | |
| CN | 113647507 | A | 16 November 2021 | (Family: none) | |
| CN | 113519690 | A | 22 October 2021 | (Family: none) | |

Form PCT/ISA/210 (patent family annex) (January 2015)

**EP 4 292 439 A1**

**Patent documents cited in the description**

- WO 2010119985 A
- JP 2013009617 A
- JP 2020029571 A
- JP H11276162 A